# FASCICULE DE BREVET EUROPEEN

(11) **EP 1 072 738 B1**
(45) Date de publication et mention de la délivrance du brevet: **16.03.2005**
(21) Numéro de dépôt: 99440212.1
(22) Date de dépôt: 27.07.1999
(51) Int. Cl.: E04H 17/16, F16B 2/10, E01F 9/011

(54) **Collier d'assemblage, en particulier pour mobilier urbain**
Verbindungsschelle insbesondere für Strassenmöbel
Assembly collar particularly for urban furniture

(43) Date de publication de la demande: 31.01.2001
(73) Titulaire: Societe Financiere du Val D'orbey, (Societe Anonyme), 68650 Lapoutroie (FR)
(72) Inventeur: Husson, Daniel, 68240 Kaysersberg (FR)
(74) Mandataire: Nuss, Pierre

(56) Documents cités:
- EP-A- 0 038 229
- EP-A- 0 321 355
- FR-A- 974 301
- FR-A- 1 601 873
- US-A- 1 764 584

## Description

La présente invention concerne le domaine des assemblages de structures tubulaires, en particulier des mobiliers urbains, et notamment des dispositifs utilisables comme barrières fixes ou analogues, et a pour objet un collier d'assemblage, en particulier pour mobilier urbain.

Actuellement, la réalisation de barrières fixes s'effectue par mise en oeuvre de panneaux de structures tubulaires montés sur des poteaux disposés à intervalles réguliers au moyen de colliers du type serrés sur les poteaux et coopérant avec les panneaux de barrière par l'intermédiaire de moignons tubulaires ou autres dispositifs coopérant avec une extrémité correspondante des colliers. La fixation des moignons dans ladite extrémité des colliers s'effectue par insertion de ces derniers suivant l'axe longitudinal des colliers de montage, c'est-à-dire perpendiculairement à l'axe des poteaux de support. Une telle utilisation de colliers nécessite, généralement, pour l'installation d'une barrière de longueur importante, mettant en oeuvre plusieurs panneaux individuels, la mise en oeuvre, pour chaque panneau, de quatre colliers, de sorte que sur chaque poteau intermédiaire il est nécessaire de monter quatre colliers pour réaliser la fixation de deux panneaux adjacents.

Un tel montage de colliers présente, cependant, un effet esthétique peu satisfaisant, ces colliers étant relativement encombrants. En outre, la prévision d'un collier pour chaque moignon de fixation entraîne une disposition en quinconce de ces colliers et nécessite un montage correspondant des moignons sur les barrières.

On connaît aussi, par FR-A-974 301 un collier permettant de saisir et de serrer parallèlement, dans un même plan, une barre et un élément en forme de tige. Cependant, ces colliers présentent les inconvénients d'autres colliers connus, à savoir d'être d'épaisseur constante et de ne pas permettre un montage esthétique dans un encombrement faible, préférentiellement équivalent à une épaisseur de collier.

Pour obvier à l'inconvénient esthétique précité il a été proposé de réaliser des colliers réversibles relativement à l'axe vertical du poteau de support et présentant sur une partie de leur corps une découpe dans le plan longitudinal médian permettant l'imbrication de deux colliers successifs l'un dans l'autre en hauteur. Il en résulte une réduction de l'encombrement général des colliers et un effet esthétique amélioré.

Toutefois, dans le cas d'un montage de panneaux de barrière le long d'une pente, c'est-à-dire avec un décalage en hauteur d'une barrière par rapport à l'autre, ces colliers doivent également être décalés en hauteur, du fait du moyen de montage intermédiaire entre la barrière et le collier, c'est-à-dire du moignon ou autre dispositif de fixation. Il s'ensuit que les inconvénients précités concernant les montages décalés subsistent.

La présente invention a pour but de pallier ces inconvénients, en proposant un collier d'assemblage pour mobilier urbain, permettant la réalisation d'un montage esthétique, quelle que soit la pente du terrain, tout en utilisant un nombre de colliers réduit au minimum.

A cet effet, le collier d'assemblage pour mobilier urbain, notamment pour des dispositifs utilisables comme barrières fixes ou analogues, présentant une partie de montage sur un poteau de support, munie d'un perçage de diamètre correspondant à celui dudit poteau et pourvue d'une découpe suivant un plan médian longitudinal perpendiculaire à l'axe du perçage pour permettre son imbrication dans une découpe correspondante d'un collier correspondant identique, caractérisé en ce qu'il est pourvu d'un évidement tubulaire d'axe parallèle à celui de son perçage de fixation sur le poteau de support, ledit collier étant en deux demi-parties indépendantes reliées entre elles en position de service au moyen d'au moins une vis ou un boulon de serrage.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en perspective d'un collier conforme à l'invention ;
la figure 2 est une vue de dessus du collier suivant la figure 1 ;
la figure 3 est une vue en perspective représentant le montage de deux colliers avec un décalage angulaire entre eux ;
la figure 4 est une vue en élévation représentant une partie de barrière mettant en oeuvre des colliers conformes à l'invention, suivant une disposition sur un terrain plan, et
la figure 5 est une vue analogue à celle de la figure 4 représentant un montage de barrière dans une disposition en pente.

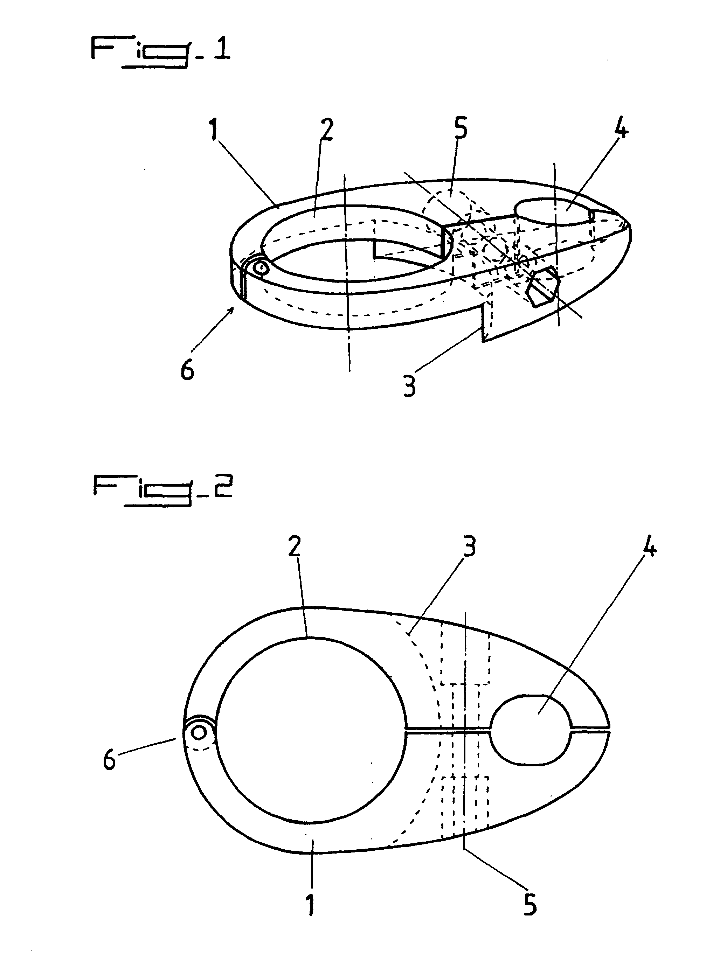

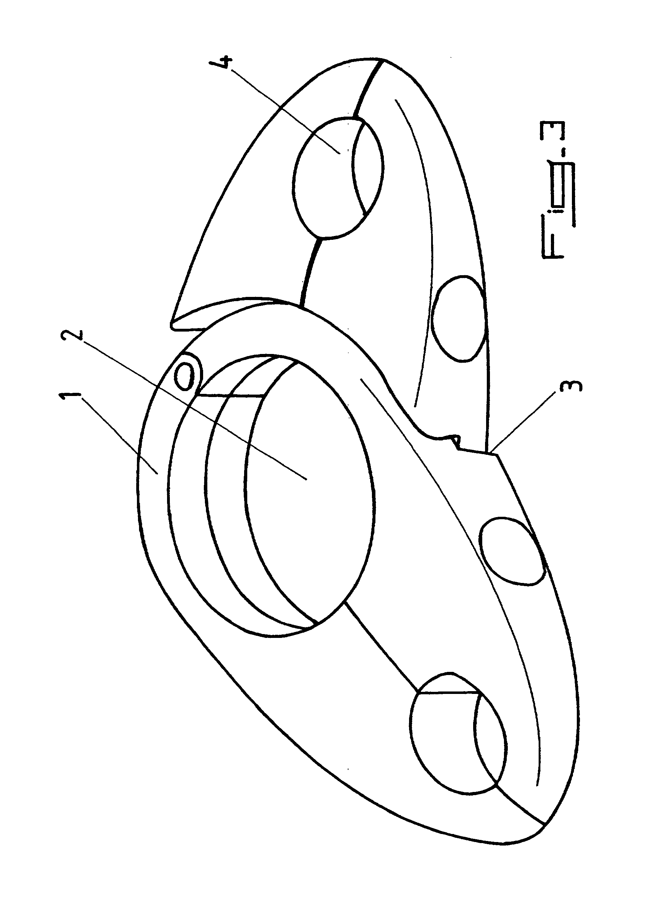

Les figures 1 et 2 des dessins annexés représentent un collier d'assemblage, en particulier pour mobilier urbain, présentant une partie 1 de montage sur un poteau de support, munie d'un perçage 2 de diamètre correspondant à celui dudit poteau et pourvue d'une découpe 3 suivant un plan médian longitudinal perpendiculaire à l'axe du perçage 2 et permettant son imbrication dans une découpe correspondante 3 d'un collier correspondant.

Conformément à l'invention, ce collier est pourvu d'un évidement tubulaire 4 d'axe parallèle à celui de son perçage 2 de fixation sur le poteau de support, ledit collier étant en deux demi-parties indépendantes reliées entre elles en position de service au moyen d'au moins une vis ou un boulon de serrage 5 (représenté(e) par son trait d'axe). Les parties indépendantes formant chaque collier sont avantageusement symétriques par rapport à un plan vertical passant par les axes parallèles du perçage 2 et de l'évidement 4, seuls les logements de la tête de vis, de l'écrou ou le perçage taraudé étant, bien entendu, différents d'une partie symétrique à l'autre.

Dans le mode de réalisation représenté aux dessins annexés, il est prévu un assemblage des deux demi-parties formant le collier par une seule vis ou un seul boulon. Cependant, il peut être envisagé d'effectuer cet assemblage par au moins deux vis ou boulons, ce afin de réaliser, par exemple, un serrage plus énergique, d'une part, du collier sur le poteau de support et, d'autre part, de la partie tubulaire de l'élément à fixer sur ledit poteau.

Selon une caractéristique de l'invention, les deux demi-parties constituant le collier sont avantageusement reliées entre elles par l'intermédiaire d'une charnière 6 réalisée au niveau de la partie 1 de fixation sur le poteau de support, préférentiellement dans le plan vertical longitudinal du collier, c'est-à-dire celui passant par les axes parallèles du perçage 2 et de l'évidement 4. Il est également possible de réaliser les deux demi-parties constituant le collier comme des éléments indépendants s'appliquant l'un contre l'autre en position de service par une surface plane.

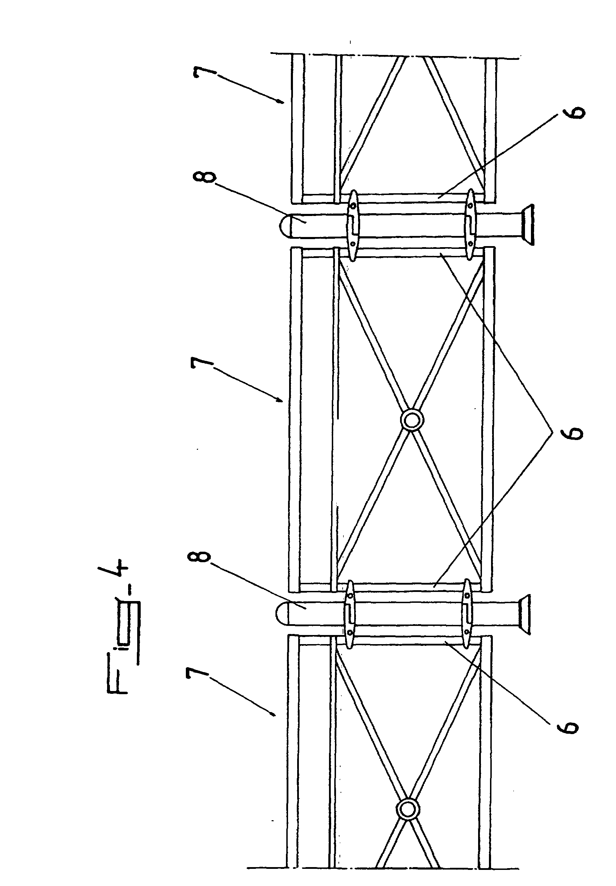

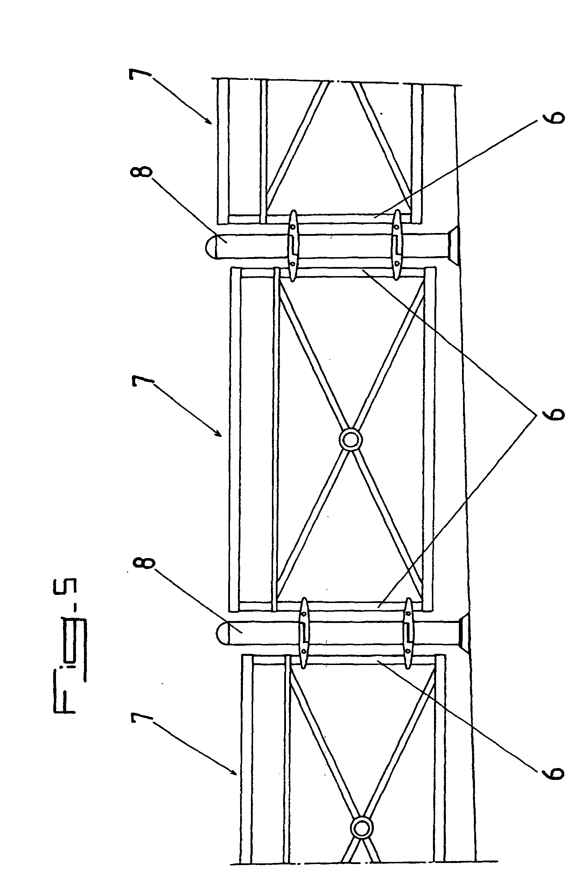

La prévision d'un évidement 4 s'étendant parallèlement au perçage 2 de fixation sur un poteau de support permet, comme il ressort plus particulièrement des figures 4 et 5, un montage direct du montant tubulaire 6 d'une barrière 7 sur le collier conforme à l'invention et, de ce . fait, un réglage en hauteur de ladite barrière 7 par rapport au poteau de support correspondant 8, par simple coulissement du montant 6 dans l'évidement 4, ce sans déplacement du collier. Il en résulte, comme représenté plus particulièrement à la figure 5 des dessins annexés, une possibilité de déplacement en hauteur d'une barrière 7 par rapport à une autre, ce qui est particulièrement intéressant et nécessaire dans le cas d'une installation le long d'une pente.

Par ailleurs, la prévision de la découpe 3 suivant un plan médian longitudinal perpendiculaire à l'axe du perçage 1 de fixation sur un poteau de support 8 permet une rotation mutuelle de deux colliers s'étendant suivant un même plan horizontal, de sorte qu'il est possible d'effectuer simultanément une adaptation angulaire du montage de deux barrières successives 7 (figure 3).

Conformément à une autre caractéristique de l'invention, non représentée aux dessins annexés, le collier peut être pourvu, en outre, dans son extrémité portant l'évidement 4, d'un perçage s'étendant perpendiculairement audit évidement 4, et permettant un montage en bout d'un moignon ou autre dispositif de fixation d'un élément tubulaire, ledit perçage pouvant, éventuellement, être traversé perpendiculairement par une vis ou un boulon de serrage du collier. Un tel perçage en bout peut éventuellement être prévu pour la fixation d'un accessoire en complément d'une barrière. Une telle fixation peut, notamment, être envisagée dans le cas de réalisation de structures plus complexes, à savoir de jeux ou analogues.

Selon une autre caractéristique de l'invention, non représentée aux dessins annexés, il est également possible de prévoir sur l'une ou l'autre ou sur les deux demi-parties du collier un ou plusieurs perçages complémentaires d'axe parallèle à celui de l'évidement 4, pour le montage d'autres éléments tubulaires. Ces perçages complémentaires peuvent, par exemple, être en relation, chacun, avec un perçage taraudé correspondant ou avec un trou traversant, d'axe perpendiculaire, permettant le serrage individuel de l'élément tubulaire y pénétrant.

Le collier d'assemblage, en particulier pour mobilier urbain, conforme à l'invention permet un montage esthétique d'une suite de structures tubulaires sur des poteaux de support, aussi bien par rapport à une surface plane que par rapport à une surface dénivelée, ce en assurant une continuité optique au niveau de chaque noeud d'assemblage formé par deux colliers sur un poteau. Ce collier est particulièrement applicable au montage de barrières, mais trouve aussi son application dans le montage d'autres équipements, en particulier de mobiliers urbains, tels que des corbeilles, des paniers, des bancs, etc... sur des poteaux de support.

L'invention a été décrite plus particulièrement à propos de poteaux de support et de barrières présentant des montants tubulaires cylindriques, mais l'application de l'invention s'étend aussi à des tubes de sections différentes, à savoir polygonales ou ovales, le réglage de la position angulaire entre deux colliers montés sur un même poteau étant alors simplement limité par la section dudit poteau. Il en est de même en ce qui concerne le montant de barrière par rapport au collier.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention, qui est déterminé par la teneur des revendications.

## Revendications

1. Collier d'assemblage pour mobilier urbain, notamment pour des dispositifs utilisables comme barrières fixes ou analogues, présentant une partie (1) de montage sur un poteau de support, munie d'un perçage (2) de diamètre correspondant à celui dudit poteau et pourvue d'une découpe (3) suivant un plan médian longitudinal perpendiculaire à l'axe du perçage (2) pour permettre son imbrication dans une découpe correspondante d'un collier correspondant identique, **caractérisé en ce qu'**il est pourvu d'un évidement tubulaire (4) d'axe parallèle à celui de son perçage (2) de fixation sur le poteau de support, ledit collier étant en deux demi-parties indépendantes reliées entre elles en position de service au moyen d'au moins une vis ou un boulon de serrage (5).

2. Collier, suivant la revendication 1, **caractérisé en ce que** l'assemblage des deux demi-parties formant le collier est effectué par au moins deux vis ou boulons.

3. Collier, suivant la revendication 1, **caractérisé en ce que** les deux demi-parties constituant le collier sont avantageusement reliées entre elles par l'intermédiaire d'une charnière (6) réalisée au niveau de la partie (1) de fixation sur le poteau de support, dans le plan vertical longitudinal du collier, c'est-à-dire celui passant par les axes parallèles du perçage (2) et de l'évidement (4).

4. Collier, suivant la revendication 1, **caractérisé en ce que** les deux demi-parties constituant le collier sont réalisées sous forme d'éléments indépendants s'appliquant l'un contre l'autre en position de service par une surface plane.

5. Collier, suivant l'une quelconque des revendications 1 à 4, **caractérisé en ce qu'**il est pourvu, en outre, dans son extrémité portant l'évidement (4), d'un perçage s'étendant perpendiculairement audit évidement (4), et permettant un montage en bout d'un moignon ou autre dispositif de fixation d'un élément tubulaire, ledit perçage pouvant, éventuellement, être traversé perpendiculairement par une vis ou un boulon de serrage du collier.

6. Collier, suivant l'une quelconque des revendications 1 à 5, **caractérisé en ce qu'**il est muni sur ses deux demi-parties d'un ou de plusieurs perçages complémentaires d'axe parallèle à celui de l'évidement (4), pour le montage d'autres éléments tubulaires.

7. Collier, suivant la revendication 6, **caractérisé en ce que** les perçages complémentaires sont en relation, chacun, avec un perçage taraudé correspondant ou avec un trou traversant, d'axe perpendiculaire, permettant le serrage individuel de l'élément tubulaire y pénétrant.

## Claims

1. Assembly collar for street furniture, in particular for devices that may be used as fixed barriers or the like, having a portion(1) for mounting on a support post, provided with a hole (2) having a diameter corresponding to that of said post and provided with a cut-out (3) along a median longitudinal plane perpendicular to the axis of the hole (2) in order to allow said collar to be fitted into a corresponding cut-out of an identical corresponding collar,
**characterised in that** the collar has a tubular recess (4) having an axis parallel to that of its hole (2) for fixing to the support post, said collar being in two independent half-parts interconnected in the service position by means of at least one screw or gripping bolt (5).

2. Collar according to claim 1, **characterised in that** the two half-parts forming the collar are assembled using at least two screws or bolts.

3. Collar according to claim 1, **characterised in that** the two half-parts forming the collar are advantageously interconnected by means of a hinge (6) provided in the region of the portion (1) for fixing to the support post, in the vertical longitudinal plane of the collar, i.e. the plane passing through the parallel axes of the hole (2) and the recess (4).

4. Collar according to claim 1, **characterised in that** the two half-parts forming the collar are in the form of independent elements applied against each other in the service position along a flat surface.

5. Collar according to any one of claims 1 to 4, **characterised in that** it is also provided, in its end containing the recess (4), with a hole extending perpendicularly to said recess (4) and allowing mounting of a tubular element at the end of a stub or other fixing device, wherein said hole may optionally be traversed perpendicularly by a screw or a bolt for gripping the collar.

6. Collar according to any one of claims 1 to 5, **characterised in that**, for the mounting of other tubular elements, it is provided on its two half-parts with one or more complementary holes having an axis parallel to that ofthe recess (4).

7. Collar according to claim 6, **characterised in that** the complementary holes are each related to a corresponding tapped hole or to a through-hole, having a perpendicular axis, allowing individual gripping of the tubular element penetrating therein.

## Patentansprüche

1. Montagering für öffentliche Einrichtungen, insbesondere für Vorrichtungen,die als feste Absperrungen oder ähnliches verwendbar sind, welcher ein Montageteil (1) zur Anbringung an einem Stützpfosten aufweist, das mit einer Bohrung versehen ist, deren Durchmesser dem des besagten Stützpfostens entspricht, und der einen Abschnitt (3) entlang einer Längsmittelebene senkrecht zur Achse der Bohrung (2) aufweist, um sein Ineinandergreifen in einen korrespondierenden Abschnitt eines entsprechenden identischen Montageringes zu ermöglichen, **dadurch gekennzeichnet, daß** er eine rohrförmige Aussparung (4) mit einer Achse, die parallel zu seiner Bohrung (2) zur Befestigung an dem Stützpfosten aufweist, wobei besagter Montagering aus zwei unabhängigen Halbteilen besteht, die in einer Betriebsstellung mittels mindestens einer Schraube oder eines Verschlußbolzens (5) miteinander verbunden sind.

2. Montagering nach Anspruch 1, **dadurch gekennzeichnet, daß** die Montage der beiden Halbteile, die den Montagering bilden, durch mindestens zwei Schrauben oder Bolzen erfolgt.

3. Montagering nach Anspruch 1, **dadurch gekennzeichnet, daß** die beiden Halbteile, die den Montagering bilden, vorteilhafterweise über ein Scharnier (6) miteinander verbunden sind, welches an dem Montageteil (1) zur Anbringung an dem Stützpfosten in der vertikalen Längsebene des Montageringes, das heißt in derjenigen Ebene, die durch die parallelen Achsen der Bohrung (2) und der Aussparung (4) läuft, verwirklicht ist.

4. Montagering nach Anspruch 1, **dadurch gekennzeichnet, daß** die zwei Halbteile, die den Montagering bilden, in der Form von unabhängigen Elementen verwirklicht sind, die in der Betriebsstellung flächig aneinander anliegen.

5. Montagering nach einem der Ansprüche 1 bis 4, **dadurch gekennzeichnet, daß** er weiterhin in seinem Endbereich, der die Aussparung (4) aufweist, mit einer Bohrung versehen ist, die sich senkrecht zu der Aussparung (4) erstreckt und eine Montage an der Spitze eines Stumpfs oder auch einer anderen Befestigungsvorrichtung zur Anbringung an einem rohrförmigen Element ermöglicht, wobei besagte Bohrung unter Umständen von einer Schraube oder einem Verschlußbolzen des Montageringes senkrecht durchquert werden kann.

6. Montagering nach einem der Ansprüche 1 bis 5, **dadurch gekennzeichnet, daß** er an seinen beiden Halbteilen mit einer oder mehreren komplementären Bohrungen mit einer Achse, die parallel zu der Aussparung (4) verläuft, versehen ist, um weitere rohrförmige Elemente zu montieren.

7. Montagering nach Anspruch 6, **dadurch gekennzeichnet, daß** die komplementären Bohrungen jeweils in Relation zu einer entsprechenden Gewindebohrung oder zu einer Durchgangsbohrung mit einer senkrechten Achse sind, die eine individuelle Befestigung der darin eingesetzten rohrförmigen Elemente ermöglichen.
